# EUROPEAN PATENT SPECIFICATION

(11) **EP 3 858 769 B1**
(45) Date of publication and mention of the grant of the patent: **06.12.2023**
(21) Application number: 21153587.7
(22) Date of filing: 26.01.2021
(51) Int. Cl.: B65G 57/10

(54) **UNIT AND METHOD FOR MOVING AND ACCUMULATING SACHETS**
EINHEIT UND VERFAHREN ZUM BEWEGEN UND SAMMELN VON BEUTELN
UNITÉ ET PROCÉDÉ PERMETTANT DE DÉPLACER ET D'ACCUMULER DES SACHETS

(30) Priority: 30.01.2020 IT 202000001762
(43) Date of publication of application: 04.08.2021
(73) Proprietor: Universal Pack S.r.l., 47842 San Giovanni in Marignano (RN) (IT)
(72) Inventor: Donati, Pietro, 47842 San Giovanni in Marignano (RN) (IT)
(74) Representative: Petraz, Gilberto Luigi

(56) References cited:
- DE-A1-102015 115 732
- IT-A1- PI20 110 030
- JP-A- 2002 114 374
- JP-A- 2012 224 359
- KR-B1- 101 883 632

## Description

### FIELD OF THE INVENTION

The present invention concerns a unit for moving and accumulating sachets, provided with a sorting device configured to stack, in an orderly manner, a certain number of sachets before they are sent to a secondary packaging unit. The movement and accumulation unit can be disposed, for example, at the end of the line of a primary packaging unit, interfaced with a transport line that takes the sachets to a secondary packaging unit.

The sachets in question may contain, for example, different types of solid, liquid or powder products, such as, by way of example only, drugs, supplements, foods, granules, seeds, creams, detergents or other.

### BACKGROUND OF THE INVENTION

Apparatuses for packaging sachets are known, in the field of automatic machines having the function of automatically introducing objects into packages or boxes.

Such apparatuses typically comprise a primary packaging unit, in which the loose products are metered and packaged in sachets, also referred to in the field as primary packaging, and a secondary packaging unit, in which groups of sachets are inserted into flexible packages, or into boxes, also referred to in the field as secondary packaging. In the packaging industry, a secondary packaging unit configured to pack a group of sachets inside a flexible packaging is called a "flowpack", while a secondary packaging unit configured to pack a group of sachets inside a box is called "cartoner".

Between the primary packaging unit and the secondary packaging unit there is a unit for moving and accumulating sachets that allows to move groups of sachets to be inserted inside the packages in an orderly manner.

The unit for moving and accumulating sachets comprises a feed plane configured to allow one or more sachets to slide from the primary packaging unit to the secondary packaging unit.

The sachets can advance in groups and be moved "edgewise", that is, with their side of the lateral edge resting on the feed plane, or they can be stacked and moved one above the other on the feed plane.

The movement units known in the state of the art comprise a feed device mobile in a feed direction to thrust the sachets from a first end of the feed plane, in correspondence with which the sachets are suitably fed to the movement unit, to a second end, opposite the first end, in correspondence with which the sachets are transferred to a sorting device. When the group of sachets ordered by the sorting device is in position to be conveyed to the secondary packaging unit, an inserter device transfers the sachets. Typically, the inserter device transfers the sachets from the sorting device to a transport line provided with a plurality of drawers or pockets, each intended to receive an ordered group of sachets, which takes them to the secondary packaging unit.

Typically, the sachets can contain solid, liquid or powder products, such as, for example, drugs, supplements, foods, granules, seeds, creams, detergents or others. The sachets can therefore have various shapes, such as, for example, rectangular, stick-shaped, square, or other type according to their content and/or to production needs. Obviously, also the position in which the sachets are disposed on the feed plane and the reciprocal positioning between them can determine variations in their shape.

These variations in shape can create problems during the packaging of the sachets. In fact, in this step, the sachets must already be organized in ordered groups and take up as little space as possible. In fact, it often happens that due to knocks, manipulations, or other events that occur during the normal operative filling and/or moving cycle, the shape of the sachets may vary, given that, in most cases, inside the sachets there are fluids or powders that do not have their own shape, but take that of their container.

Known devices for sorting sachets can be the "pick and place" type and comprise one or more manipulators which pick up the sachets one by one from the feed plane to position them in a respective package. These devices are bulky, complicated to manage and control, and also require frequent maintenance interventions.

Other types of sorting devices can comprise a series of compartments having a bulk slightly larger than the sachets to be received and inside which the sachets are sorted by vertical drop. Once the established number of sachets has been reached, they are transferred to the movement device located downstream, or directly to the secondary packaging unit. In some known solutions, the plane that defines the bottom of the compartments can be vertically mobile so that the sachets do not drop too abruptly. On each occasion, depending on the number of sachets, the height of the compartment can be suitably adjusted. An example of this sorting device is described in document EP1602584A1.

One of the disadvantages of these sorting devices is that, although the plane that defines the bottom of the compartments can be adjustable, this configuration is not able to keep the group of sachets in order, which, during their transfer into the compartments, may have lost their correct orientation, for example due to reciprocal collisions or with other components of the unit.

Document JP2012224359A shows a unit for moving and accumulating sachets which comprises a sorting device equipped with support means, to receive the accumulated sachets, and with abutment means disposed above the support means. In this document, however, the sachets are not stacked on top of each other, but against each other in a horizontal direction. Consequently, the cooperation between the support means and the contrast means disposed above the support means does not allow to solve the problem of maintaining the correct orientation of the sachets during their transfer.

Said document JP 2012 224359 A discloses a unit for moving and accumulating sachets according to the preamble of claim 1. Said document discloses also a method for moving and accumulating sachets, said method providing to move a plurality of groups of said sachets on a feed plane from an entry zone of the feed plane toward an exit zone of the feed plane parallel to a direction of feed, said groups of sachets being organized in rows, parallel to each other, and extending transversely with respect to said direction of feed. The method further provides to position said groups of sachets on support means of a sorting device, the support means moving vertically between a plurality of operative positions, of which at least one initial operative position in which said support means are located at a vertical height not higher than that of the feed plane in order to receive said groups of sachets, and a final or end-of-travel operative position, in which the groups of sachets that have just been accumulated and sorted is moved toward a transport line. Moreover, said method provides to vertically abut said groups of sachets, positioned on each occasion on said support means, with contrast means disposed above said support means and vertically mobile with respect to said support means, and in a coordinated manner therewith, so as to keep said groups of sachets at least partly enclosed, with respect to two different opposite sides, respectively by the support means and by the contrast means. Said method further provides to laterally abut the groups of sachets in the direction of feed with abutment means.

Document JP2002114374A shows a unit for moving and accumulating bags, to be transferred and stacked on a pallet. The articles are stacked in layers, in which each layer contains a plurality of bags disposed to create a predetermined shape, typically rectangular or square. The stability of the stack of bags is obtained by providing a plurality of bags to each layer of the stack, the disposition of which is different from the disposition of the bags of the previous and subsequent layers.

Documents ITPI20110030 and KR101883632 show a unit for moving and accumulating sheets of paper and books respectively, in which these articles are fed and accumulated in correspondence with support means that are gradually lowered as the articles are accumulated. The sheets of paper and books themselves have a flat shape, which makes them easily stackable, in order to obtain stable and balanced stacks. The problems felt in the field of application of the present invention are not encountered in moving and accumulating sheets of paper or books.

There is therefore a need to perfect a unit for moving and accumulating sachets that can overcome at least one of the disadvantages of the state of the art.

In particular, one purpose of the present invention is to provide a unit for moving and accumulating sachets which allows a certain number of sachets to be stacked, sorted and compacted so as to make them available and suitable for packaging, even if the sachets have previously lost their correct orientation.

Another purpose of the present invention is to provide a unit for moving and accumulating sachets which allows to sort, in vertical stacks, a certain number of sachets, even a large number, without the stacks of sachets coming apart and/or collapsing.

Another purpose of the present invention is to provide a method for moving and accumulating sachets which is simple to implement and which allows a certain number of sachets to be stacked, sorted and compacted so as to make them available and suitable for packaging.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a unit for moving and accumulating sachets according to claim 1 is provided. Said unit comprises a feed plane on which a plurality of groups of sachets is fed, by means of a mobile feed device, from an entry zone of the feed plane to an exit zone of the feed plane parallel to a direction of feed. The groups of sachets are organized in rows, parallel to each other, and extending transversely with respect to the direction of feed.

In accordance with the present invention, the unit for moving and accumulating sachets comprises a sorting device disposed in such a position as to receive the groups of sachets being moved toward the exit zone of the feed plane.

The sorting device comprises support means configured to support one or more groups of sachets. The support means are vertically mobile between a plurality of operative positions, of which at least one initial operative position in which the support means are located at a vertical height not higher than that of the feed plane in order to receive the groups of sachets, for example a first row of groups of sachets. For example, in the initial operative position the support means can be aligned with the feed plane, thus being located at the same vertical height as the latter. In an alternative embodiment, in the initial operative position the support means can for example be disposed at a lower vertical height than that of the feed plane.

The sorting device comprises contrast means disposed above the support means and vertically mobile with respect to the support means, and in a manner coordinated therewith, in order to abut the groups of sachets, gradually disposed on the support means, so that the groups of sachets are kept at least partly enclosed, with respect to two different opposite sides, respectively by the support means and by the contrast means.

In accordance with the present invention, the unit for moving and accumulating sachets comprises mobile abutment means, configured to abut the groups of sachets that are gradually stacked on the sorting device in the direction of feed. The mobile abutment means are mobile between an operative abutment position, in which they abut the groups of sachets into position, thus preventing a displacement thereof in the direction of feed, and an inactive position, in which they allow the movement of the groups of sachets in the direction of feed.

According to some embodiments, the mobile abutment means are vertically mobile with respect to the support means. For example, the operative abutment position can correspond to a raised position of the mobile abutment means with respect to the support means. The operative inactive position of the mobile abutment means can correspond to a lowered position thereof with respect to the support means.

The sorting device therefore allows to stack a certain number of sachets in an orderly manner in substantially homogeneous stacks organized in one or more rows which extend transversely with respect to the direction of feed, preventing the stacks of sachets from breaking apart. Furthermore, the contrast pressure generated by the contrast means allows to dispose the sachets, which could previously have suffered shocks or manipulations that caused their shape or orientation to change, according to the correct orientation, or bring them back to assume such correct orientation. The action of the contrast means, in cooperation with the support means, also allows to compact the sachets in order to make them available and suitable for the subsequent packaging, allowing to reduce the bulk of the sachets to the absolute minimum.

The invention provides also a method for moving and accumulating sachets according to claim 9. The method provides to move a plurality of groups of sachets, organized in rows, parallel to each other, and extending transversely with respect to the direction of feed, on the feed plane from the entry zone of the feed plane toward the exit zone of the feed plane parallel to the direction of feed.

The method also provides to position the groups of sachets on the support means of the sorting device, the support means moving vertically between a plurality of operative positions, of which at least one initial operative position in which the support means are located at a vertical height not higher than that of the feed plane in order to receive a sachet or a group of sachets, and a final or end-of-travel operative position, in which the support means are cooperating with a thrust device which is able to move the groups of sachets just accumulated and sorted toward a transport line.

The method also provides to vertically abut the groups of sachets, positioned on each occasion on the support means, with the contrast means disposed above the support means and vertically mobile with respect to the support means, and in a coordinated manner therewith, so as to keep the groups of sachets at least partly enclosed, with respect to two different opposite sides, respectively by the support means and by the contrast means.

During the vertical movement of the support means and of the contrast means, the method also provides to laterally abut the groups of sachets in the direction of feed with mobile abutment means when the support means are in the final or end-of-travel operative position, and in possible intermediate operative positions between the initial operative position and the final or end-of-travel operative position.

### BRIEF DESCRIPTION OF THE DRAWINGS

The characteristics and advantages of the present invention will become apparent from the following description of some embodiments, given as a non-restrictive example with reference to the attached drawings wherein:
- fig. 1 is a lateral, partial, schematic and simplified view of a unit for moving and accumulating sachets in accordance with embodiments described here;
- fig. 2 is a schematic and simplified top view of an apparatus for sorting and packaging sachets comprising a primary packaging unit, a unit for moving and accumulating sachets in accordance with embodiments described here, a transport line and a secondary packaging unit;
- figs. 3-11 are simplified partial lateral views that show a possible operative sequence of the functioning of the unit for moving and accumulating sachets of fig. 1.

### DETAILED DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof.

Embodiments described using the attached drawings concern a unit for moving and accumulating sachets, indicated as a whole with reference number 10 in the attached drawings.

The movement unit 10 can, for example, be part of an apparatus 100 for sorting and packaging sachets S and can be configured, in this case, to move sachets S containing a product, for example, from a primary packaging unit 120, in which loose products are metered and packed into sachets S, also referred to as primary packaging in the sector, to a secondary packaging unit 130 in which groups of sachets S are inserted into flexible packs, or rigid box-shaped packaging, also referred to as secondary packaging in the sector.

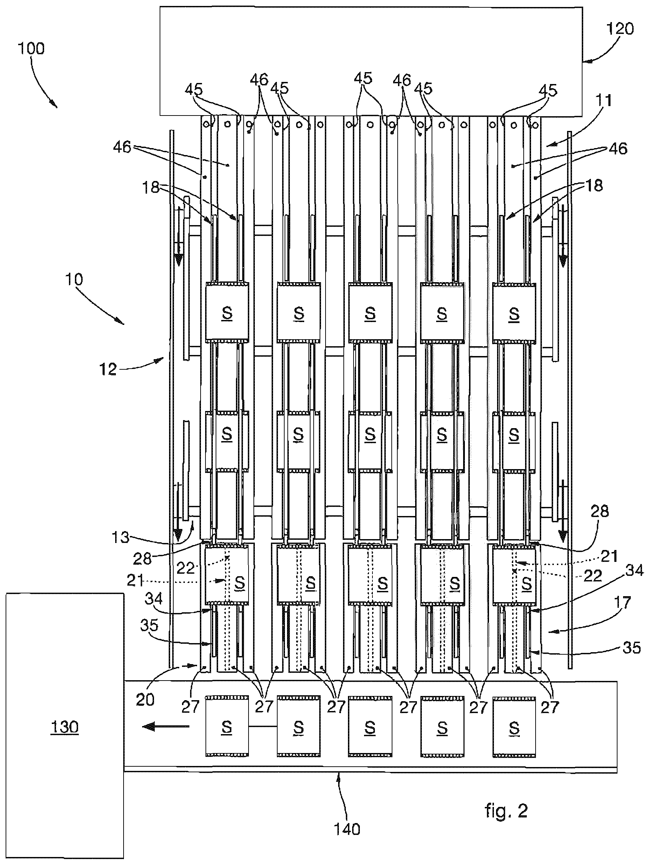

In one particular embodiment, shown in fig. 2, the unit 10 for moving and accumulating sachets S described here can be integrated or associated with the primary packaging unit 120, in particular in correspondence with the exit of the latter, in order to interface with a line 140 for transporting sachets S toward the secondary packaging unit 130.

In accordance with the present invention, the unit 10 for moving and accumulating sachets S comprises a feed plane 11 on which a plurality of groups of sachets S is fed from an entry zone I of the feed plane 11 to an exit zone O of the feed plane 11 parallel to a direction of feed Z. The groups of sachets S are organized in rows, parallel to each other and extending transversely with respect to the direction of feed Z. For this purpose, the feed plane 11, according to some embodiments provided here, provides a plurality of feed members, for example configured as sliding tracks delimited by lateral walls, or mobile transport belts or chains, disposed parallel to each other and extending parallel to the direction of feed Z. In this way, the different groups of sachets S being fed in parallel on the different feed members, in a reciprocally coordinated manner, can be fed being organized according to the rows as above.

The movement and accumulation unit 10 comprises a feed device 12 mobile at least in the direction of feed Z and configured to move the groups of sachets S on the feed plane 11 from the entry zone I to the exit zone O.

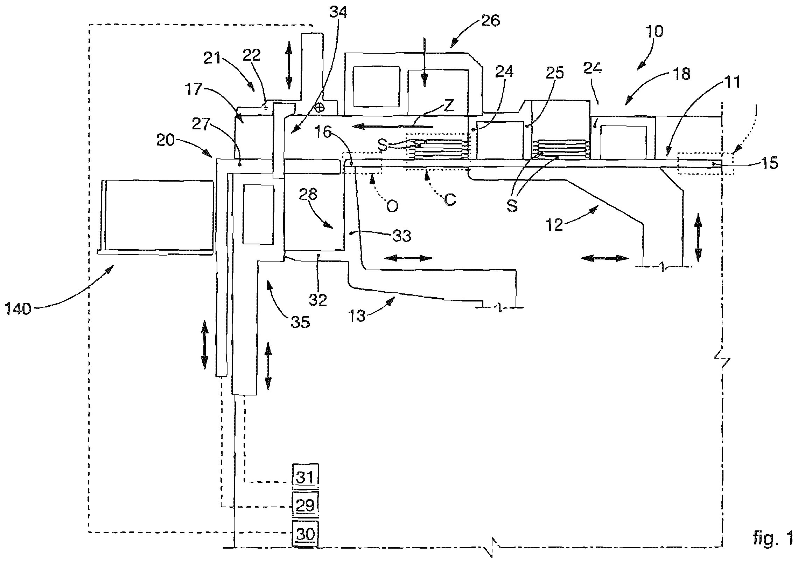

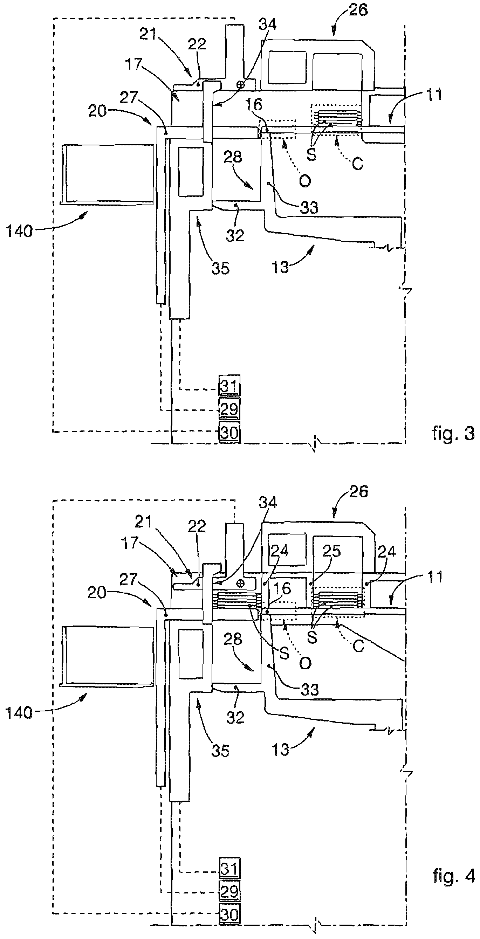

In accordance with the present invention, the unit 10 for moving and accumulating sachets S comprises a sorting device 17 disposed in such a position as to receive the groups of sachets S moved toward the exit zone O of the feed plane 11. For example, the sorting device 17 can be disposed downstream of the feed plane 11 defining an extension of the latter, at least in an initial operative position, shown in figs. 1 and 3, in which it is aligned with it.

The sorting device 17 comprises support means 20 configured to support one or more groups of sachets S. The support means 20 are vertically mobile between a plurality of operative positions, of which at least one initial operative position in which the support means 20 are located at a vertical height not higher than that of the feed plane 11, for example being able to be aligned with the feed plane 11, in order to receive a first group of sachets S.

The sorting device 17 comprises contrast means 21 disposed above the support means 20 and vertically mobile with respect to the support means 20, and in a manner coordinated therewith, in order to abut the groups of sachets S, gradually disposed on the support means 20, in such a way that the groups of sachets S are kept at least partly enclosed, with respect to two different opposite sides, respectively by the support means 20 and by the contrast means 21.

The sorting device 17 therefore allows to stack a certain number of sachets S in an orderly manner, preventing the stack of sachets S from breaking down, possibly taking some or all of the sachets S back so that they assume the correct orientation. Furthermore, the contrast pressure generated by the contrast means 21 allows to put, or take the sachets S, which could previously have suffered shocks or manipulations that caused their shape to change, back into shape. The action of the contrast means 21, in cooperation with the support means 20, also allows to compact the sachets S in order to make them available and suitable for subsequent packaging, allowing to reduce the bulk of the sachets S to an absolute minimum.

In accordance with possible solutions, the sachets S can contain solid, liquid or powder products, such as, for example, drugs, supplements, foods, granules, seeds, creams, detergents or suchlike. The sachets S can have various shapes, such as, for example, rectangular, stick-shaped, square, or any other type according to their content and/or production needs. By way of a non-limiting example, two or more sachets S can be separable and connected to each other, for example, by means of a tear-off connection portion, or of another type. In this case, these sachets S are also called paired sachets S. The sachets S containing a product have a certain thickness that defines a lateral edge of the sachets S and a certain width that defines a face or wall. According to possible embodiments, the sachets S can be moved face-wise, that is, moving the sachets S with their face side located resting on the feed plane 11, so as to be disposed in a position lying on the underlying surface, as in the examples shown in the attached drawings. Disposed in this way, the sachets S can be stacked one on top of the other in an orderly manner to define groups of sachets S, for example in a number coherent with that to be introduced into a respective pack, or a multiple or submultiple of this number.

In accordance with some embodiments, the feed plane 11 has an oblong development in the direction of feed Z. The direction of feed Z defines the direction in which the groups of sachets S slide on the feed plane 11 as well as the overall direction of the operative flow inside the movement and accumulation unit 10.

In accordance with some embodiments, the feed plane 11 comprises one or more through grooves 45, visible in fig. 2, through which the feed device 12 can slide. In particular, the feed device 12 is disposed partly below the feed plane 11 and partly above the latter, also in relation to the specific operative step of moving the groups of sachets S on the feed plane 11.

The feed plane 11 is delimited by a first end 15, in correspondence with which the groups of sachets S can be fed to the movement unit 10, and by a second end 16, opposite the first end 15, in correspondence with which the groups of sachets S are transferred downstream.

The entry zone I can, therefore, be located in correspondence with the first end 15. However, it is not excluded that the entry zone I can be disposed at a lateral end of the feed plane 11, and that the feeding of the sachets S to the feed plane 11 occurs in a transverse direction, for example, but not exclusively, orthogonal with respect to the direction of feed Z.

In accordance with one possible embodiment, the feed plane 11 can be defined by the disposition, in a transverse sense to the direction of feed Z, of a plurality of flat oblong elements 46, each one separated from the next by an interspace that effectively defines the through grooves 45. The through grooves 45 can all have the same width, in a direction transverse to the direction of feed Z, or different widths according to requirements. Optionally, the oblong elements 46 can also have different widths, but substantially the same length, so as to define a feed plane 11 having a substantially rectangular plan profile.

In accordance with some embodiments, the feed device 12 comprises at least one movement element 18 mobile at least in the direction of feed Z in order to move one or more groups of sachets S on the feed plane 11.

In the example described here, the feed device 12 comprises a plurality of movement elements 18, each of which is associated with a respective through groove 45 (fig. 2).

In particular, the through grooves 45 of the feed plane 11 are transversely distanced so that at least one pair of movement elements 18 is able to move the same group of sachets S, or two adjacent groups of sachets S. For this purpose, a pair of through grooves 45, with which a respective pair of movement elements 18 is associated, has a reciprocal distance that is smaller than the width of the sachet S. In this way, it is possible to move a group of sachets S in a safe manner, reducing the possibility of causing a reciprocal misalignment of the sachets S that make up the group.

In the example described here, see fig. 2, the feed device 12 comprises five pairs of movement elements 18 and is therefore capable of moving, in parallel, for example five or more groups of sachets S, distinct and separate from each other, at a time. These five groups of sachets S are disposed aligned to each other so as to form a row which extends transverse, in particular orthogonal, with respect to the direction of feed Z. Obviously, the number of movement elements 18 depends only on the overall transverse bulk of the movement and accumulation unit 10, therefore a greater or lesser number of movement elements 18 is not excluded, and consequently a row of groups of sachets S formed by more, or less, than five groups of sachets S.

The movement elements 18 are stably attached to a first movement member, not shown, which allows to actuate the movement of the movement elements 18 according to the operative cycle of movement of the groups of sachets S on the feed plane 11.

In accordance with possible embodiments, the feed device 12 can be moved in such a way that the movement elements 18 complete a closed-loop trajectory.

By way of example only, the movement elements 18 can perform a forward travel, in which the movement elements 18 are disposed straddling the feed plane 11 and are moved in a direction parallel to the direction of feed Z in order to move the groups of sachets S disposed on the feed plane 11, and a return travel, in which the movement elements 18 are first moved in a direction orthogonal to the feed plane 11, downward, so as to completely free the feed plane 11 to allow the new sachets S to be fed, then they are moved in a direction parallel and opposite the direction of feed Z, and subsequently they are moved in a direction orthogonal to the feed plane 11, upward, in order to restart the cycle.

In accordance with some embodiments, the movement element 18 can comprise one or more active or contact portions 24 substantially orthogonal to the feed plane 11 and configured to cooperate with the groups of sachets S to allow them to be fed.

In the example described here, the movement element 18 comprises two active or contact portions 24 aligned in the direction of feed Z to move two groups of sachets S at a time (see for example fig. 1). For example, during the forward travel of the movement elements 18 a first group of sachets S, previously fed, is thrust to the exit zone O and a second group of sachets S, just fed, is thrust into an intermediate compacting zone C between the entry zone I and the exit zone O, where a compactor device 26 can be present and act, as will be described in more detail below.

The movement element 18 can be provided with an abutment portion 25, disposed downstream of a respective active or contact portion 24 at a distance equal to the length of the sachets S so that the groups of sachets S to be moved are constrained between the active or contact portion 24 and the abutment portion 25, and can advance with a substantially linear trajectory without becoming disordered (fig. 1).

In accordance with some embodiments, the sorting device 17 is configured to receive, group and compact one or more groups of sachets S before the groups of sachets S are transferred to the transport line 140 which conveys them to the secondary packaging unit 130 in which the groups of sachets S can be inserted, for example, into a container or a package.

In accordance with some embodiments, the support means 20 are vertically mobile between an initial operative position, in which they are substantially aligned with the feed plane 11 in order to receive the first groups of sachets S moved by the feed device 12, and a final or end-of-travel operative operation, in which the transfer of the expected number of groups of sachets S onto the sorting device 17 has been completed. It should be noted that in this end-of-travel operative position the support means 20 are in a position suitable to cooperate with a thrust device 13 which is able to move the groups of sachets S just accumulated and sorted toward the transport line 140.

Between the initial operative position and the final operative position as above, the support means 20 can move vertically between a plurality of intermediate operative positions, comprised between the initial operative position and the final operative position as above, as a function of the number of sachets S to be sorted. In this way, it is possible to stack the groups of sachets S one on top of the other, which on each occasion arrive in the exit zone O of the feed plane 11.

In accordance with the present invention, the contrast means 21 are vertically mobile between a contrast position, in which they are configured to abut the groups of sachets S present on the support means 20, and a free position, in which they are raised to allow the positioning of the groups of sachets S on the support means 20 or on the groups of sachets S already positioned previously.

When the contrast means 21 are in the contrast position, together with the support means 20 they define a retaining interspace inside which a certain number of sachets S are, on each occasion, clamped into position. The size of the retaining interspace can, therefore, vary as a function of the number of sachets S gradually positioned in a stacked manner on the support means 20.

In accordance with some embodiments, the sorting device 17 is provided with at least two actuators 29, 30 independent of each other and configured to move respectively the support means 20 and the contrast means 21, as a function of the number of sachets S that, on each occasion, are positioned on the support means 20.

In particular, the actuators 29, 30 allow to move the support means 20 and the contrast means 21 respectively along a directrix of linear displacement, substantially orthogonal to the direction of feed Z. This directrix of displacement is preferably substantially vertical.

In the present case, the actuator 29 allows to move the support means 20 between the initial operative position and the final operative position, possibly through the one or more intermediate positions as above, and vice versa. The actuator 30 allows to move the contrast means 21 between the contrast position and the free position, and vice versa.

In accordance with some embodiments, the support means 20 can be defined by a plurality of support elements 27 disposed in a transverse sense, that is, substantially orthogonal to the direction of feed Z, each one separated from the next by an operative interspace. For example, the operative interspaces as above can be aligned, or not, with the through grooves 45 of the feed plane 11. The support elements 27 are connected to each other so as to define a temporary mobile support plane for the groups of sachets S before their transfer to the transport line 140 and then to the secondary packaging unit 130.

In accordance with some embodiments, the contrast means 21 can be defined by a plurality of contrast elements 22 which, individually or in pairs, can cooperate, as described above, with a stack of sachets S disposed on the support means 20 in a position below. In the example described here, each contrast element 22 can have an "L" shape so that the horizontal segment cooperates with the sachets S and the vertical segment allows to connect all the contrast elements 22 to each other in a transverse sense. For example, the contrast elements 22 can be connected to each other at the upper part in correspondence with a supporting transverse upright which can receive movement from the actuator 30.

In accordance with some embodiments, the unit 10 for moving and accumulating sachets S can comprise a thrust device 13 configured to thrust the groups of sachets S sorted, stacked and compacted by the sorting device 17 toward the transport line 140 for the subsequent movement to the secondary packaging unit 130.

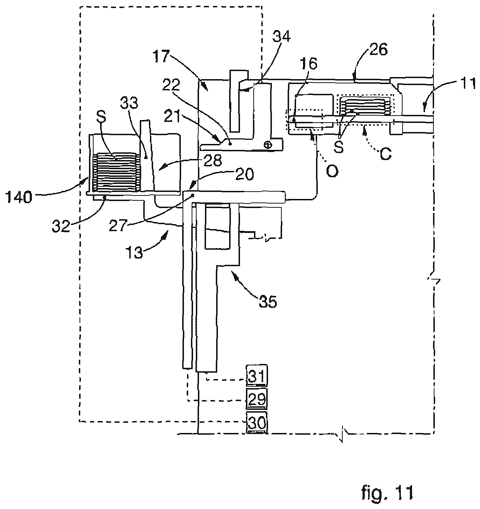

In accordance with some embodiments, the thrust device 13 comprises at least one thrust element 28 mobile at least in the direction of feed Z in order to move the groups of sachets S from the device 17 for sorting the sachets S toward the transport line 140, fig. 1 and fig. 11.

In the example described here, the thrust device 13 comprises a plurality of thrust elements 28, each of which comprises a support portion 32 and a contrast and thrust portion 33, substantially orthogonal to the support portion 32. In this way, as the sorting device 17 descends downward with an increasing number of sachets S, the latter can be contained, in the direction of feed Z, by the contrast and thrust portions 33 that act as a vertical guide in that direction.

In accordance with some embodiments, the thrust elements 28 are disposed aligned in a direction transverse to the direction of feed Z and are spaced apart in the same direction so that each support portion 32 can cooperate with the support means 20 of the sorting device 17 becoming positioned, at least when the thrust device 13 is in the operative condition as above, in the interspace defined between two contiguous support elements 27.

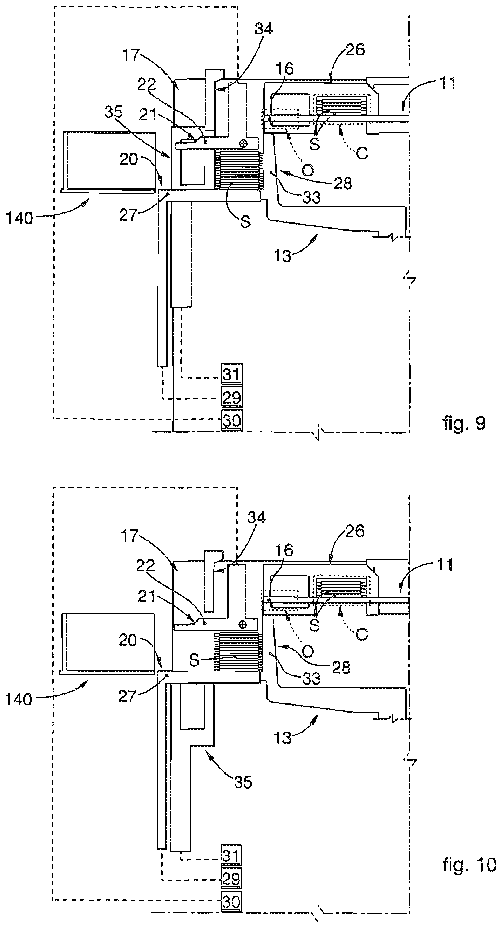

In particular, when the support means 20 are in the final or end-of-travel operative position as above, the support elements 27 of the support means 20 are located at the same height as the support portions 32 of the thrust elements 28 of the thrust device 13, defining with them a single support plane for the groups of sachets S (figs. 10 and 11).

The thrust elements 28 are stably attached to a second movement member, not shown, which allows to actuate the movement of the thrust elements 28 in order to thrust the sachets S on the transport line 140.

The thrust device 13 is configured to pass from an operative position of stand-by and support, in which the thrust elements 28 are positioned in such a way that the support portions 32 are vertically aligned, but offset, with the support elements 27 of the support means 20 (figs. 1 and 3-8), and an operative thrust position, in which the thrust elements 28 are translated horizontally in the direction of feed Z in order to thrust the sachets S toward the transport line 140 (fig. 11).

In accordance with some embodiments, the unit 10 for moving and accumulating sachets S can comprise first fixed abutment means 34 configured to abut the groups of sachets S, gradually stacked on the sorting device 17, in the direction of feed Z, on the opposite side with respect to the side where the feed plane 11 is disposed, at least when the support means 20 are in the initial operative position.

In this way, during the step of sorting and stacking the groups of sachets S on the sorting device 17, when the groups of sachets S are moved from the feed plane 11 onto the support means 20, the first fixed abutment means 34 prevent the sachets S from falling from the latter. In particular, when the movement elements 18 thrust the sachets S onto the support means 20, the first fixed abutment means 34 define an end-of-travel for the sachets S, which can be located on the support means 20 in a precise and defined position.

The fixed abutment means 34 can, for example, have a vertical development, substantially orthogonal with respect to the support elements 27 of the support means 20 so as to offer a surface thereof, or an edge thereof, in order to determine an end-of-travel for the sachets S in the direction of feed Z.

The unit 10 for moving and accumulating sachets S comprises second mobile abutment means 35 configured to abut the groups of sachets S, gradually stacked on the sorting device 17, in the direction of feed Z, on the opposite side with respect to the side where the feed plane 11 is disposed.

The second mobile abutment means 35 are vertically aligned with the first fixed abutment means 34, and located below them, so that the sachets S are abutted in the direction of feed Z in all the operative positions of the support means 20. In particular, the second mobile abutment means 35 abut the sachets S when the support means 20 are in the final operative position and in the intermediate operative positions.

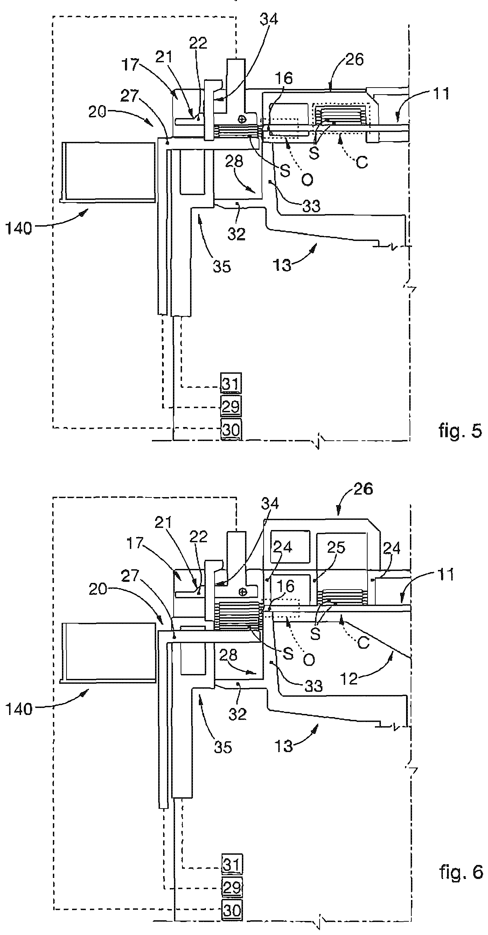

The second mobile abutment means 35 are vertically mobile between an operative abutment position, in which they abut the sachets S into position and prevent a displacement thereof in the direction of feed Z (figs. 6-9), and an inactive position, in which they are lowered and allow the movement of the sachets S in the direction of feed Z toward the transport line 140 (figs. 1, 3-5, 10 and 11). For example, when the support means 20 are in the final operative position, the second mobile abutment means 35 pass from the operative abutment position to the inactive position, and the thrust device 13 passes from the operative stand-by and support position to the operative thrust position, moving the sachets S, already released at the upper part by the contrast means 21, toward the transport line 140 (figs. 10 and 11).

The second mobile abutment means 35 are provided with an actuator 31 independent from the actuators 29, 30 and configured to move the second abutment means 35 between the operative positions described above.

The second mobile abutment means 35 can be disposed orthogonally to the support elements 27 of the sorting device 17 in correspondence with the respective operative interspaces between the support elements 27. In this way, the second mobile abutment means 35 can pass through the operative interspaces as above when they are taken from the operative or abutment position to the inactive position, and vice versa.

In accordance with some embodiments provided here, the movement unit 10 can comprise a compactor device 26 positioned in correspondence with a compacting zone C of the feed plane 11, positioned between the entry zone I and the exit zone O.

The compactor device 26 is vertically mobile, that is, in a direction orthogonal to the feed plane 11, in order to pass from a free position, in which the compactor device 26 is disposed above the feed plane 11, not interfering with the groups of sachets S, to a compacting and vibrating position, in which the compactor device 26 is in a lowered position to compact the row of groups of sachets S located in the compacting zone C.

The compacting device 26, when it is located in the compacting and vibrating position, is configured to generate and transfer vibrations, in particular at high frequency, onto the groups of sachets S in order to dispose the sachets S, which define each group, in an orderly manner with respect to each other. The vibrations can have a direction orthogonal and/or parallel to the feed plane 11.

In accordance with the present invention, a method according to claim 9 is provided to move and accumulate sachets S. The method provides to:
- move a plurality of groups of sachets S on the feed plane 11 from the entry zone I of the feed plane 11 toward the exit zone O of the feed plane 11 parallel to the direction of feed Z, the groups of sachets S being organized in rows, parallel to each other, and extending transversely with respect to the direction of feed Z,
- position the groups of sachets S on the support means 20 of the sorting device 17, the support means 20 moving vertically between a plurality of operative positions, of which at least one initial operative position in which the support means 20 are located at a vertical height not higher than that of the feed plane 11, for example being aligned with the feed plane 11, in order to receive the groups of sachets S, and
- vertically abut the groups of sachets S, positioned on each occasion on the support means 20, with the contrast means 21 disposed above the support means 20 and vertically mobile with respect to the support means 20, and in a coordinated manner therewith, in such a way as to keep the groups of sachets S at least partly enclosed, with respect to two different opposite sides, respectively by the support means 20 and by the contrast means 21.

With reference to figs. 3-11, a possible operative sequence of the functioning of the unit 10 for moving and accumulating sachets S is described.

When the packaging cycle of a certain product is activated in an apparatus 100 for sorting and packaging sachets S, the product is metered into sachets S, previously formed and subsequently sealed, inside the primary packaging unit 120 of the apparatus 100.

Subsequently, the sachets S are transferred in groups to the movement and accumulation unit 10 and are fed onto the feed plane 11 in correspondence with the entry zone I. These groups of sachets S are organized in rows, parallel to each other, and extending transversely with respect to the direction of feed Z.

The groups of sachets S are then fed in the direction of feed Z by the feed device 12, in this case by the movement elements 18. In particular, while a first row of groups of sachets S is fed into the entry zone I, a second row of groups of sachets S, previously fed, is located in correspondence with the compacting zone C, in order to be compacted by the compactor device 26, fig. 3.

When the second row of groups of sachets S has been compacted, the feed device 12 thrusts the second row of groups of sachets S in the direction of feed Z on the support means 20 of the sorting device 17 which are located in the initial operative position. At this moment, the contrast means 21 are in the free position so that the groups of sachets S can be disposed on the support means 20, fig. 4. The presence of the first fixed contrast means 34 allows to prevent the sachets S from falling, and to determine a sorted position on the support means 20. At the same time, the first row of sachets S as above is thrust by the same feed device 12 from the entry zone I to the compacting zone C.

Subsequently, fig. 5, the contrast means 21 pass from the free position to the contrast position, squashing and retaining the groups of sachets S just disposed on the support means 20. Simultaneously or at a later time, the support means 20 are lowered, passing into a first intermediate position so that the upper surface of the sachets S which are located higher up is aligned with the feed plane 11 in order to receive another row of groups of sachets S on top of it. The contrast means 21 are lowered in a coordinated manner with the support means 20 so as to always retain the sachets S in position. While the contrast means 21 squash the second row of sachets S, the compactor device 26 is lowered so as to compact the first row of sachets S in correspondence with the compacting zone C.

Subsequently, fig. 6, the contrast means 21 are moved upward passing from the contrast position to the free position, as well as the compactor device 26. Immediately afterwards, the feed device 12 feeds another row of groups of sachets S which are thrust on top of the groups of sachets S positioned previously, forming higher groups, that is, comprising a greater number of sachets S stacked vertically. Meanwhile, another row of sachets S is thrust, always by the feed device 12, from the entry zone I to the compacting zone C.

The formation of higher groups sachets S determines a further lowering of the support means 20 so that the group of sachets S, and in particular the sachets S previously disposed on the support means 20, are abutted by the second mobile abutment means 35, which are obviously in their operative abutment position.

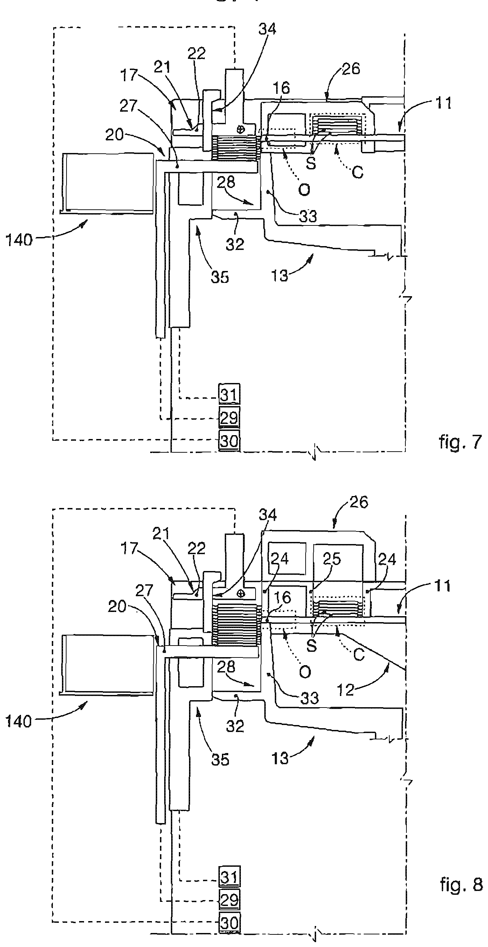

In the following operative steps, the groups of sachets S are gradually stacked in the manner described above, figs. 7-8. As the sachets S are gradually stacked, they are abutted laterally on one side by the first fixed abutment means 34 and by the second mobile abutment means 35, always kept in their operative abutment position, and on the other side by the thrust elements 28. In this way, the stacks of sachets S always remain vertically sorted.

When the step of accumulating, stacking and sorting the sachets S is finished, that is, when the stacks of sachets S have reached the number provided for packaging, the support means 20 pass to the final operative position while, in a coordinated manner, the contrast means 21 move downward keeping the sachets S squashed. The sachets S are therefore squashed by the contrast means 21 at the upper part and abutted laterally by the second abutment means 35, on one side, and by the contrast and thrust portions 33 of the thrust elements 28, with respect to an opposite side, fig. 9.

Subsequently, fig. 10, the second abutment means 35 are moved from the operative abutment position to the inactive position and, fig. 11, the thrust device 13 is activated in order to thrust the sachets S, stacked in groups and organized in a row that extends transversely to the direction of feed Z, toward the transport line 140.

It is clear that modifications and/or additions of parts or steps may be made to the unit for moving and accumulating sachets and to the corresponding method for moving and accumulating sachets as described heretofore, provided that they fall within the scope of protection as defined by the claims.

## Claims

1. Unit (10) for moving and accumulating sachets (S), comprising:
- a feed plane (11) on which a plurality of groups of sachets (S) is fed, by means of a feed device (12), from an entry zone (I) of said feed plane (11) to an exit zone (O) of said feed plane (11) parallel to a direction of feed (Z), said groups of sachets (S) being organized in rows, parallel to each other, and extending transversely with respect to said direction of feed (Z),
said unit for moving and accumulating sachets (S) comprising a sorting device (17) disposed in such a position as to receive said groups of sachets (S) from the exit zone (O) of said feed plane (11) and being provided with:
- support means (20), configured to support one or more groups of sachets (S), being vertically mobile between a plurality of operative positions, of which at least one initial operative position in which said support means (20) are located at a vertical height not higher than that of said feed plane (11) in order to receive said one or more groups of sachets (S), and
- contrast means (21) disposed above said support means (20) being vertically mobile with respect to said support means (20), and in a coordinated manner therewith, in order to abut said groups of sachets (S), disposed on said support means (20), so that said groups of sachets (S) are kept at least partly enclosed, with respect to two different opposite sides, respectively by said support means (20) and by said contrast means (21);
said movement and accumulation unit (10) being **characterized in that** it comprises mobile abutment means (35) configured to abut said groups of sachets (S), gradually stacked on said sorting device (17), in the direction of feed (Z), on the opposite side with respect to the side where said feed plane (11) is disposed, said mobile abutment means (35) being provided with an actuator (31) configured to move said mobile abutment means (35) between an operative abutment position, in which they prevent the displacement of said groups of sachets (S) in the direction of feed (Z), and an inactive position, in which they allow the movement of the groups of sachets (S) in the direction of feed (Z), wherein the mobile abutment means (35) are mobile relative to the support means (20).

2. Movement and accumulation unit (10) as in claim 1, **characterized in that** said support means (20) are vertically mobile between an initial operative position, in which they are substantially aligned with said feed plane (11) in order to receive the first groups of sachets (S) moved by said feed device (12), and a final or end-of-travel operative position, in which they cooperate with a thrust device (13) which is able to move the groups of sachets (S) that have just been accumulated and sorted toward a transport line (140).

3. Movement and accumulation unit (10) as in claim 1 or 2, **characterized in that** said contrast means (21) are vertically mobile between a contrast position, in which they are configured to abut the groups of sachets (S) present on said support means (20), and a free position, in which they are raised in order to allow the positioning of said groups of sachets (S) on said support means (20) or on said groups of sachets (S) already positioned previously.

4. Movement and accumulation unit (10) as in any claim hereinbefore, **characterized in that** said sorting device (17) is provided with at least two actuators (29, 30) independent of each other and configured to move said support means (20) and said contrast means (21) respectively, as a function of the number of sachets (S) of said groups of sachets (S) which, on each occasion, are positioned on said support means (20).

5. Movement and accumulation unit (10) as in any claim hereinbefore, **characterized in that** it comprises first fixed abutment means (34) configured to abut the groups of sachets (S), gradually stacked on said sorting device (17), in the direction of feed (Z), on the opposite side with respect to the side where said feed plane (11) is disposed, at least when said support means (20) are in the initial operative position.

6. Movement and accumulation unit (10) as in claim 1, **characterized in that** in the operative abutment position the mobile abutment means (35) are raised with respect to the support means (20) and abut said groups of sachets (S) into position and prevent a displacement thereof in the direction of feed (Z), and in the inactive position the mobile abutment means (35) are lowered with respect to the support means (20) and allow the movement of the groups of sachets (S) in the direction of feed (Z) toward a transport line (140).

7. Movement and accumulation unit (10) as in any claim hereinbefore, **characterized in that** it comprises a thrust device (13) configured to thrust the groups of sachets (S) sorted, stacked and compacted by the sorting device (17) toward a transport line (140), wherein said thrust device (13) comprises at least one thrust element (28) mobile at least in the direction of feed (Z) in order to move the groups of sachets (S) from the device (17) for sorting the sachets (S) toward said transport line (140).

8. Movement and accumulation unit (10) as in claim 7, **characterized in that** said at least one thrust element (28) comprises a support portion (32) and a contrast and thrust portion (33) substantially orthogonal to the support portion (32).

9. Method for moving and accumulating sachets (S), said method providing:
- to move a plurality of groups of said sachets (S) on a feed plane (11) from an entry zone (I) of the feed plane (11) toward an exit zone (O) of the feed plane (11) parallel to a direction of feed (Z), said groups of sachets (S) being organized in rows, parallel to each other, and extending transversely with respect to said direction of feed (Z),
- position said groups of sachets (S) on support means (20) of a sorting device (17), the support means (20) moving vertically between a plurality of operative positions, of which at least one initial operative position in which said support means (20) are located at a vertical height not higher than that of the feed plane (11) in order to receive said groups of sachets (S), and a final or end-of-travel operative position, in which said support means (20) are cooperative with a thrust device (13) which is able to move the groups of sachets (S) that have just been accumulated and sorted toward a transport line (140),
- vertically abut said groups of sachets (S), positioned on each occasion on said support means (20), with said contrast means (21) disposed above said support means (20) and vertically mobile with respect to said support means (20), and in a coordinated manner therewith, so as to keep said groups of sachets (S) at least partly enclosed, with respect to two different opposite sides, respectively by the support means (20) and by the contrast means (21), and
- laterally abut the groups of sachets (S) in the direction of feed (Z), during the vertical movement of said support means (20) and of said contrast means (21), with mobile abutment means (35) when said support means (20) are in said final or end-of-travel operative position, and in possible intermediate operative positions between said initial operative position and said final or end-of-travel operative position, wherein said mobile abutment means (35) are moved relative to said support means (20) by an actuator (31) between an operative abutment position, in which they prevent the displacement of said groups of sachets (S) in the direction of feed (Z) and an inactive position, in which they allow the movement of the groups of sachets (S) in the direction of feed (Z).

10. Method as in claim 9, **characterized in that** during the vertical movement of said support means (20) and of said contrast means (21) it is provided to laterally abut the groups of sachets (S), gradually stacked on the sorting device (17), in the direction of feed (Z) with first fixed abutment means (34), at least when said support means (20) are in said initial operative position.

11. Method as in claim 9 or 10, **characterized in that** when the support means (20) are in the final or end-of-travel operative position, after the step of lateral abutment of the groups of sachets (S), the mobile abutment means (35) are moved from the operative abutment position to the inactive position, so as to allow the thrust of said groups of sachets (S) toward a transport line (140).

## Patentansprüche

1. Einheit (10) zum Bewegen und Ansammeln von Päckchen (S), aufweisend:
- eine Zuführebene (11), auf welcher eine Mehrzahl von Gruppen von Päckchen (S) zugeführt wird mittels einer Zuführvorrichtung (12) von einer Eingangszone (I) der Zuführebene (11) aus zu einer Ausgangszone (O) der Zuführebene (11) parallel zu einer Zuführrichtung (Z), wobei die Gruppen von Päckchen (S) in Reihen organisiert sind, die parallel zueinander sind und sich quer bezüglich der Zuführrichtung (Z) erstrecken,
wobei die Einheit zum Bewegen und Ansammeln von Päckchen (S) eine Sortiervorrichtung (17) aufweist, die in einer solchen Position angeordnet ist, um die Gruppen von Päckchen (S) von der Ausgangszone (O) der Zuführebene (11) zu empfangen, und die bereitgestellt ist mit:
- Haltemitteln (20), die eingerichtet sind, um eine oder mehrere Gruppen von Päckchen (S) zu halten, und vertikal bewegbar sind zwischen einer Mehrzahl von Betriebspositionen, mit von diesen wenigstens einer anfänglichen Betriebsposition, in welcher die Haltemittel (20) in einer vertikalen Höhe nicht höher als jene der Zuführebene (11) angeordnet sind, um die eine oder mehreren Gruppen von Päckchen (S) zu empfangen, und
- Gegenhaltemitteln (21), die über den Haltemitteln (20) angeordnet sind und vertikal bewegbar sind bezüglich der Haltemittel (20) in einer damit koordinierten Weise, um an den Gruppen von Päckchen (S) anzuliegen, die an den Haltemitteln (20) angeordnet sind, sodass die Gruppen von Päckchen (S) zumindest teilweise umschlossen sind, bezüglich zweier verschiedener, entgegengesetzter Seiten, zugeordnet von den Haltemitteln (20) und von den Gegenhaltemitteln (21),
wobei die Bewegungs- und Ansammlungs-Einheit (10) **dadurch gekennzeichnet ist, dass** sie bewegbare Anschlagmittel (35) aufweist, die eingerichtet sind, um an den Gruppen von Päckchen (S), die fortschreitend an der Sortiervorrichtung (17) gestapelt werden, in der Zuführrichtung (Z) anzuliegen an der bezüglich der Seite, wo die Zuführebene (11) angeordnet ist, entgegengesetzten Seite, wobei die bewegbaren Anschlagmittel (35) mit einem Aktuator (31) versehen sind, der eingerichtet ist, um die bewegbaren Anschlagmittel (35) zu bewegen zwischen einer Anschlagbetriebsposition, in welcher sie die Verlagerung der Gruppen von Päckchen (S) in der Zuführrichtung (Z) verhindern, und einer Inaktivposition, in welcher sie die Bewegung der Gruppen von Päckchen (S) in der Zuführrichtung (Z) erlauben, wobei die bewegbaren Anschlagmittel (35) relativ zu den Haltemitteln (20) bewegbar sind.

2. Bewegungs- und Ansammlungs-Einheit (10) gemäß Anspruch 1, **dadurch gekennzeichnet, dass** die Haltemittel (20) vertikal bewegbar sind zwischen einer anfänglichen Betriebsposition, in welcher sie im Wesentlichen mit der Zuführebene (11) ausgerichtet sind, um die ersten Gruppen von Päckchen (S) zu empfangen, die von der Zuführvorrichtung (12) bewegt werden, und einer Final- oder Bewegungsende-Betriebsposition, in welcher sie mit einer Schiebevorrichtung (13) zusammenwirken, die imstande ist, die Gruppen von Päckchen (S), die just angesammelt und sortiert worden sind, zu einer Transportlinie (140) hin zu bewegen.

3. Bewegungs- und Ansammlungs-Einheit (10) gemäß Anspruch 1 oder 2, **dadurch gekennzeichnet, dass** die Gegenhaltemittel (21) vertikal bewegbar sind zwischen einer Gegenhalteposition, in welcher sie eingerichtet sind, um an den Gruppen von Päckchen (S), die an den Haltemitteln (20) vorliegen, anzuliegen, und einer Freigabeposition, in welcher sie angehoben sind, um das Positionieren der Gruppen von Päckchen (S) an den Haltemitteln (20) oder an den bereits vorausgehend positionierten Gruppen von Päckchen (S) zu erlauben.

4. Bewegungs- und Ansammlungs-Einheit (10) gemäß irgendeinem vorigen Anspruch, **dadurch gekennzeichnet, dass** die Sortiervorrichtung (17) bereitgestellt ist mit wenigstens zwei Aktuatoren (29, 30), die voneinander unabhängig sind und eingerichtet sind, um zugeordnet die Haltemittel (20) und die Gegenhaltemittel (21) zu bewegen in Abhängigkeit von der Anzahl von Päckchen (S) der Gruppen von Päckchen (S), welche im gegebenen Falle an den Haltemitteln (20) positioniert sind.

5. Bewegungs- und Ansammlungs-Einheit (10) gemäß irgendeinem vorigen Anspruch, **dadurch gekennzeichnet, dass** sie erste feststehende Anschlagmittel (34) aufweist, die eingerichtet sind, um an den Gruppen von Päckchen (S), die fortschreitend an der Sortiervorrichtung (17) gestapelt werden, in der Zuführrichtung (Z) anzuliegen an der bezüglich der Seite, wo die Zuführebene (11) angeordnet ist, entgegengesetzten Seite, zumindest wenn die Haltemittel (20) in der anfänglichen Betriebsposition sind.

6. Bewegungs- und Ansammlungs-Einheit (10) gemäß Anspruch 1, **dadurch gekennzeichnet, dass** in der Anschlagbetriebsposition die bewegbaren Anschlagmittel (35) bezüglich der Haltemittel (20) angehoben sind und die Gruppen von Päckchen (S) in Position stoßen und eine Verlagerung davon verhindern in der Zuführrichtung (Z), und in der Inaktivposition die bewegbaren Anschlagmittel (35) abgesenkt sind bezüglich der Haltemittel (20) und die Bewegung der Gruppen von Päckchen (S) in der Zuführrichtung (Z) zu einer Transportlinie (140) hin erlauben.

7. Bewegungs- und Ansammlungs-Einheit (10) gemäß irgendeinem vorigen Anspruch, **dadurch gekennzeichnet, dass** sie eine Schiebevorrichtung (13) aufweist, die eingerichtet ist, um die von der Sortiervorrichtung (17) sortierten, gestapelten und kompaktierten Gruppen von Päckchen (S) zu einer Transportlinie (140) hin zu schieben, wobei die Schiebevorrichtung (13) wenigstens ein Schiebeelement (28) aufweist, das wenigstens in der Zuführrichtung (Z) bewegbar ist, um die Gruppen von Päckchen (S) von der Vorrichtung (17) zum Sortieren der Päckchen (S) zu der Transportlinie (140) hin zu bewegen.

8. Bewegungs- und Ansammlungs-Einheit (10) gemäß Anspruch 7, **dadurch gekennzeichnet, dass** das wenigstens eine Schiebeelement (28) einen Halteabschnitt (32) und einen Gegenhalte- und Schiebeabschnitt (33) aufweist, der im Wesentlichen orthogonal zu dem Halteabschnitt (32) ist.

9. Verfahren zum Bewegen und Ansammeln von Päckchen (S), wobei das Verfahren bereitstellt:
- eine Mehrzahl von Gruppen von Päckchen (S) auf einer Zuführebene (11) zu bewegen von einer Eingangszone (I) der Zuführebene (11) aus zu einer Ausgangszone (O) der Zuführebene (11) hin parallel zu einer Zuführrichtung (Z), wobei die Gruppen von Päckchen (S) in Reihen organisiert sind, die zueinander parallel sind und sich quer bezüglich der Zuführrichtung (Z) erstrecken,
- die Gruppen von Päckchen (S) an Haltemitteln (20) einer Sortiervorrichtung (17) zu positionieren, wobei die Haltemittel (20) sich vertikal bewegen zwischen einer Mehrzahl von Betriebspositionen, mit von denen wenigstens einer anfänglichen Betriebsposition, in welcher die Haltemittel (20) in einer vertikalen Höhe angeordnet sind, die nicht höher ist als jene der Zuführebene (11), um die Gruppen von Päckchen (S) zu empfangen, und einer Final- oder Bewegungsende-Betriebsposition, in welcher die Haltemittel (20) mit einer Schiebevorrichtung (13) zusammenwirkend sind, welche imstande ist, die Gruppen von Päckchen (S), die just angesammelt und sortiert worden sind, zu einer Transportlinie (140) hin zu bewegen,
- vertikal an den Gruppen von Päckchen (S), die bei gegebener Gelegenheit an den Haltemitteln (20) positioniert sind, anzuliegen mit den Gegenhaltemitteln (21), die über den Haltemitteln (20) angeordnet sind und bezüglich der Haltemittel (20) und damit in koordinierter Weise vertikal bewegbar sind, um die Gruppen von Päckchen (S) wenigstens teilweise umschlossen zu halten, bezüglich zweier verschiedener, entgegengesetzter Seiten, zugeordnet durch die Haltemittel (20) und durch die Gegenhaltemittel (21), und
- seitlich an den Gruppen von Päckchen (S) in der Zuführrichtung (Z), während der vertikalen Bewegung der Haltemittel (20) und der Gegenhaltemittel (21), anzuliegen mit den bewegbaren Anschlagmitteln (35), wenn die Haltemittel (20) in der Final- oder Bewegungsende-Betriebsposition sind, und in möglichen Zwischenbetriebspositionen zwischen der anfänglichen Betriebsposition und der Final- oder Bewegungsende-Betriebsposition, wobei die bewegbaren Anschlagmittel (35) durch einen Aktuator (31) relativ zu den Haltemitteln (20) bewegt werden zwischen einer Anschlagbetriebsposition, in welcher sie die Verlagerung der Gruppen von Päckchen (S) in der Zuführrichtung (Z) verhindern, und einer Inaktivposition, in welcher sie die Bewegung der Gruppen von Päckchen (S) in der Zuführrichtung (Z) erlauben.

10. Verfahren gemäß Anspruch 9,
**dadurch gekennzeichnet, dass,** während der vertikalen Bewegung der Haltemittel (20) und der Gegenhaltemittel (21), es bereitgestellt ist, an den Gruppen von Päckchen (S), die fortschreitend an der Sortiervorrichtung (17) gestapelt werden, in der Zuführrichtung (Z) seitlich anzuliegen mit ersten feststehenden Anschlagmitteln (34), zumindest wenn die Haltemittel (20) in der anfänglichen Betriebsposition sind.

11. Verfahren gemäß Anspruch 9 oder 10,
**dadurch gekennzeichnet, dass,** wenn die Haltemittel (20) in der Final- oder Bewegungsende-Betriebsposition sind, nach dem Schritt des seitlichen Anliegens an den Gruppen von Päckchen (S), die bewegbaren Anschlagmittel (35) bewegt werden von der Anschlagbetriebsposition aus in die Inaktivposition, um das Schieben der Gruppen von Päckchen (S) zu einer Transportlinie (140) hin zu erlauben.

## Revendications

1. Unité (10) pour déplacer et accumuler des sachets (S), comprenant :
- un plan d'alimentation (11) sur lequel une pluralité de groupes de sachets (S) est alimentée, au moyen d'un dispositif d'alimentation (12), à partir d'une zone d'entrée (I) dudit plan d'alimentation (11) vers une zone de sortie (O) dudit plan d'alimentation (11) parallèlement à une direction d'alimentation (Z), lesdits groupes de sachets (S) étant organisés en rangées, parallèles les unes aux autres, et s'étendant transversalement par rapport à ladite direction d'alimentation (Z),
ladite unité de déplacement et d'accumulation de sachets (S) comprenant un dispositif de tri (17) disposé dans une position de manière à recevoir lesdits groupes de sachets (S) depuis la zone de sortie (O) dudit plan d'alimentation (11) et étant pourvue :
- de moyens de support (20), configurés pour supporter un ou plusieurs groupes de sachets (S), étant mobiles verticalement entre une pluralité de positions opérationnelles, dont au moins une position opérationnelle initiale dans laquelle lesdits moyens de support (20) sont situés à une hauteur verticale non supérieure à celle dudit plan d'alimentation (11) afin de recevoir lesdits un ou plusieurs groupes de sachets (S), et
- des moyens d'opposition (21) disposés au-dessus desdits moyens de support (20) étant mobiles verticalement par rapport auxdits moyens de support (20), et de manière coordonnée avec ceux-ci, afin de venir en butée contre lesdits groupes de sachets (S), disposés sur lesdits moyens de support (20), de sorte que lesdits groupes de sachets (S) sont maintenus au moins partiellement enfermés, par rapport à deux côtés opposés différents, respectivement par lesdits moyens de support (20) et par lesdits moyens d'opposition (21) ;
ladite unité de déplacement et d'accumulation (10) étant **caractérisée en ce qu'**elle comprend des moyens de butée mobiles (35) configurés pour venir en butée contre lesdits groupes de sachets (S), progressivement empilés sur ledit dispositif de tri (17), dans la direction d'alimentation (Z), sur le côté opposé par rapport au côté où ledit plan d'alimentation (11) est disposé, lesdits moyens de butée mobiles (35) étant pourvus d'un actionneur (31) configuré pour déplacer lesdits moyens de butée mobiles (35) entre une position de butée opérationnelle, dans laquelle ils empêchent le déplacement desdits groupes de sachets (S) dans la direction d'alimentation (Z), et une position inactive, dans laquelle ils permettent le déplacement des groupes de sachets (S) dans la direction d'alimentation (Z), dans laquelle les moyens de butée mobiles (35) sont mobiles par rapport aux moyens de support (20).

2. Unité de déplacement et d'accumulation (10) selon la revendication 1, **caractérisée en ce que** lesdits moyens de support (20) sont mobiles verticalement entre une position opérationnelle initiale, dans laquelle ils sont sensiblement alignés avec ledit plan d'alimentation (11) afin de recevoir les premiers groupes de sachets (S) déplacés par ledit dispositif d'alimentation (12), et une position opérationnelle finale ou de fin de course, dans laquelle ils coopèrent avec un dispositif de poussée (13) qui est capable de déplacer les groupes de sachets (S) qui viennent juste d'être accumulés et triés vers une ligne de transport (140).

3. Unité de déplacement et d'accumulation (10) selon la revendication 1 ou 2, **caractérisée en ce que** lesdits moyens d'opposition (21) sont mobiles verticalement entre une position d'opposition, dans laquelle ils sont configurés pour venir en butée contre les groupes de sachets (S) présents sur lesdits moyens de support (20), et une position libre, dans laquelle ils sont soulevés afin de permettre le positionnement desdits groupes de sachets (S) sur lesdits moyens de support (20) ou sur lesdits groupes de sachets (S) déjà positionnés précédemment.

4. Unité de déplacement et d'accumulation (10) selon l'une quelconque des revendications précédentes, **caractérisée en ce que** ledit dispositif de tri (17) est pourvu d'au moins deux actionneurs (29, 30) indépendants l'un de l'autre et configurés pour déplacer lesdits moyens de support (20) et lesdits moyens d'opposition (21), respectivement, en fonction du nombre de sachets (S) desdits groupes de sachets (S) qui, à chaque fois, sont positionnés sur lesdits moyens de support (20).

5. Unité de déplacement et d'accumulation (10) selon l'une quelconque des revendications précédentes, **caractérisée en ce qu'**elle comprend des premiers moyens de butée fixes (34) configurés pour mettre en butée contre les groupes de sachets (S), progressivement empilés sur ledit dispositif de tri (17), dans la direction d'alimentation (Z), sur le côté opposé par rapport au côté où ledit plan d'alimentation (11) est disposé, au moins lorsque lesdits moyens de support (20) sont dans la position opérationnelle initiale.

6. Unité de déplacement et d'accumulation (10) selon la revendication 1, **caractérisée en ce que** dans la position de butée opérationnelle, les moyens de butée mobiles (35) sont soulevés par rapport aux moyens de support (20) et mettre en butée lesdits groupes de sachets (S) en position et empêchent un déplacement de ceux-ci dans la direction d'alimentation (Z), et dans la position inactive, les moyens de butée mobiles (35) sont abaissés par rapport aux moyens de support (20) et permettent le déplacement des groupes de sachets (S) dans la direction d'alimentation (Z) vers une ligne de transport (140).

7. Unité de déplacement et d'accumulation (10) selon l'une quelconque des revendications précédentes, **caractérisée en ce qu'**elle comprend un dispositif de poussée (13) configuré pour pousser les groupes de sachets (S) triés, empilés et compactés par le dispositif de tri (17) vers une ligne de transport (140), dans lequel ledit dispositif de poussée (13) comprend au moins un élément de poussée (28) mobile au moins dans la direction d'alimentation (Z) afin de déplacer les groupes de sachets (S) à partir du dispositif (17) pour trier les sachets (S) vers ladite ligne de transport (140).

8. Unité de déplacement et d'accumulation (10) selon la revendication 7, **caractérisée en ce que** ledit au moins un élément de poussée (28) comprend une partie de support (32) et une partie d'opposition et de poussée (33) sensiblement orthogonale à la partie de support (32).

9. Procédé pour déplacer et accumuler des sachets (S), ledit procédé comprenant les étapes consistant à :
- déplacer une pluralité de groupes desdits sachets (S) sur un plan d'alimentation (11) à partir d'une zone d'entrée (I) du plan d'alimentation (11) vers une zone de sortie (O) du plan d'alimentation (11) parallèlement à une direction d'alimentation (Z), lesdits groupes de sachets (S) étant organisés en rangées, parallèles les unes aux autres, et s'étendant transversalement par rapport à ladite direction d'alimentation (Z),
- positionner lesdits groupes de sachets (S) sur des moyens de support (20) d'un dispositif de tri (17), les moyens de support (20) se déplaçant verticalement entre une pluralité de positions opérationnelles, dont au moins une position opérationnelle initiale dans laquelle lesdits moyens de support (20) sont situés à une hauteur verticale non supérieure à celle du plan d'alimentation (11) afin de recevoir lesdits groupes de sachets (S), et une position opérationnelle finale ou de fin de course, dans laquelle lesdits moyens de support (20) coopèrent avec un dispositif de poussée (13) qui est capable de déplacer les groupes de sachets (S) qui viennent juste d'être accumulés et triés vers une ligne de transport (140),
- mettre en butée verticalement lesdits groupes de sachets (S), positionnés à chaque fois sur lesdits moyens de support (20), lesdits moyens d'opposition (21) étant disposés au-dessus desdits moyens de support (20) et mobiles verticalement par rapport auxdits moyens de support (20), et de manière coordonnée avec ceux-ci, de manière à maintenir lesdits groupes de sachets (S) au moins partiellement enfermés, par rapport à deux côtés opposés différents, respectivement par les moyens de support (20) et par les moyens d'opposition (21), et
- mettre en butée latéralement les groupes de sachets (S) dans la direction d'alimentation (Z), pendant le déplacement vertical desdits moyens de support (20) et desdits moyens d'opposition (21), avec des moyens de butée mobiles (35) lorsque lesdits moyens de support (20) sont dans ladite position opérationnelle finale ou de fin de course, et dans des positions opérationnelles intermédiaires possibles entre ladite position opérationnelle initiale et ladite position opérationnelle finale ou de fin de course, dans lequel lesdits moyens de butée mobiles (35) sont déplacés par rapport auxdits moyens de support (20) par un actionneur (31) entre une position de butée opérationnelle, dans laquelle ils empêchent le déplacement desdits groupes de sachets (S) dans la direction d'alimentation (Z), et une position inactive, dans laquelle ils permettent le déplacement des groupes de sachets (S) dans la direction d'alimentation (Z).

10. Procédé selon la revendication 9, **caractérisé en ce que** pendant le déplacement vertical desdits moyens de support (20) et desdits moyens d'opposition (21), il est prévu de mettre en butée latéralement les groupes de sachets (S), progressivement empilés sur le dispositif de tri (17), dans la direction d'alimentation (Z) avec des premiers moyens de butée fixes (34), au moins lorsque lesdits moyens de support (20) sont dans ladite position opérationnelle initiale.

11. Procédé selon la revendication 9 ou 10, **caractérisé en ce que** lorsque les moyens de support (20) sont dans la position opérationnelle finale ou de fin de course, après l'étape de mise en butée latérale des groupes de sachets (S), les moyens de butée mobiles (35) sont déplacés de la position de butée opérationnelle à la position inactive, de manière à permettre la poussée desdits groupes de sachets (S) vers une ligne de transport (140).
